Europäisches Patentamt

European Patent Office

Office européen des brevets

(19)

(11) Numéro de publication: **0 323 316**
A2

(12) **DEMANDE DE BREVET EUROPEEN**

(21) Numéro de dépôt: 88403261.6

(22) Date de dépôt: 21.12.88

(51) Int. Cl.⁴: **C 03 C 17/00**
B 05 D 1/02, B 05 B 13/04

(30) Priorité: 24.12.87 JP 327893/87

(43) Date de publication de la demande:
05.07.89 Bulletin 89/27

(84) Etats contractants désignés:
BE DE ES FR GB IT LU NL SE

(71) Demandeur: **SAINT-GOBAIN VITRAGE**
Les Miroirs 18, avenue d'Alsace
F-92400 Courbevoie (FR)

(72) Inventeur: **Fujimoto, Katsuji**
8-56, Aobadai 1-Chome
Ichihara-shi Chiba-ken (JP)

**Ito, Tooru**
7, Aobadai 1-Chome
Ichihara-shi Chiba-ken (JP)

**Okamura, Keiji**
7, Aobadai 1-Chome
Ichihara-shi Chiba-ken (JP)

(74) Mandataire: **Luziau, Nelly et al**
Saint Gobain Recherche 39, Quai Lucien Lefranc BP 135
F-93303 Aubervilliers Cédex (FR)

(54) **Procédé de formation de couches régulières par pulvérisation de compositions liquides sur un substrat et dispositif pour la mise en oeuvre de ce procédé.**

(57) L'invention concerne la formation d'une couche régulière sur un substrat en défilement par pulvérisation d'une composition liquide.

Le procédé consiste à pulvériser la composition liquide sur le substrat en défilement au moyen d'un pulvérisateur adapté pour se déplacer transversalement au substrat à une vitesse relative par rapport au substrat qui présente une composante axiale nulle. Par ce procédé, on obtient, sur le substrat, une succession de traces parallèles entre elles et perpendiculaires à la direction de défilement du substrat.

FIG. 2

EP 0 323 316 A2

**Description**

## PROCEDE DE FORMATION DE COUCHES REGULIERES PAR PULVERISATION DE COMPOSITIONS LIQUIDES SUR UN SUBSTRAT ET DISPOSITIF POUR SA MISE EN OEUVRE

L'invention est relative à un procédé de formation de couches régulières sur un substrat en défilement, par pulvérisation de compositions liquides.

L'invention concerne plus particulièrement la formation de couches régulières sur un substrat en verre pour obtenir un produit ayant des propriétés satisfaisantes sur toute la surface du substrat.

Il est connu de recouvrir le verre, par exemple, de minces couches métalliques (métal ou oxyde métallique), pour lui conférer des propriétés particulières, notamment optiques, électroconductrices, réfléchissantes du rayonnement infrarouge.

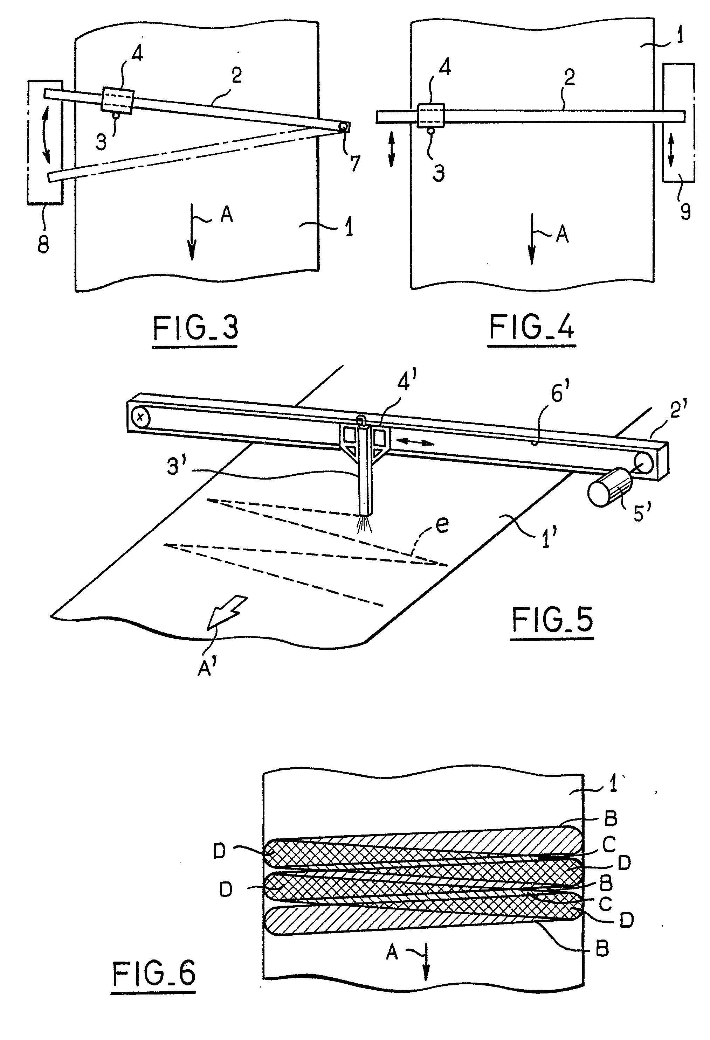

Un procédé, connu pour former de telles couches sur un substrat en verre, consiste à pulvériser une composition liquide, par exemple une solution de composés métalliques, sur la surface du verre chauffé. Un tel procédé peut être mis en oeuvre par un dispositif tel que représenté à la figure 5.

Sur cette figure, un substrat en verre 1' se déplace suivant la direction de la flèche A'. Un rail 2' fixe est monté parallèlement à la surface du substrat 1' et perpendiculairement à la direction de déplacement de ce substrat. Un pulvérisateur 3' est fixé sur un chariot 4' animé, d'un mouvement de va-et-vient le long du rail 2', par déplacement d'une courroie 6' entraînée par un moteur 5'. Lors de la mise en oeuvre de ce dispositif, le substrat en verre est chauffé à une température appropriée pour la formation de la couche souhaitée. Le pulvérisateur 3' est alimenté en composition liquide par tout dispositif d'alimentation, non représenté sur la figure 5. Le liquide est projeté sur la surface de verre sous-jacente où il s'y forme une couche.

Un tel procédé présente certains inconvénients ; en effet, le substrat en verre est entraîné à une vitesse déterminée. Comme le rail 2' est fixe et monté perpendiculairement à la direction de déplacement du substrat et que le chariot 4' est animé d'un mouvement de va-et-vient le long de ce rail, le pulvérisateur 3' fixé au chariot 4' projette la composition liquide sur le substrat suivant une trace qui suit un trajet en zigzag (e). Comme on peut le voir à la figure 6, les traces déposées, qui ont une certaine largeur, se superposent dans certaines zones. Ainsi, la trace B, obtenue lors du déplacement de gauche à droite du pulvérisateur, et la trace C, obtenue lors du déplacement de droite à gauche du pulvérisateur se superposent dans les zones (hachurées) D. Il en résulte un dépôt irrégulier de substance, ce qui se traduit par des propriétés non identiques sur toute la surface du substrat et dans certains cas, des variations de couleur, ce qui est inacceptable.

La présente invention a donc pour objet un procédé permettant d'éviter ces inconvénients et d'obtenir un substrat en verre muni d'une couche de meilleure qualité.

L'invention a aussi pour objet un dispositif pour mettre en oeuvre ce procédé.

Le procédé selon l'invention, pour former une couche régulière sur un substrat en défilement, notamment du verre, consiste à pulvériser sur le substrat chauffé, une composition liquide au moyen d'un pulvérisateur adapté pour se déplacer transversalement au substrat. Ce procédé se caractérise en ce qu'on pulvérise la composition liquide en déplaçant le pulvérisateur avec une vitesse relative par rapport au substrat qui présente une composante axiale nulle.

On obtient, par ce procédé, une succession de traces sur le substrat qui sont toutes parallèles entre elles et perpendiculaires au sens de défilement du substrat. Les irrégularités des dépôts, suivant la largeur du substrat, obtenues avec les procédés antérieurs, sont ainsi supprimées.

Plusieurs modes de réalisation sont possibles.

Ainsi, on peut déplacer continûment le pulvérisateur, sur toute la largeur du substrat, suivant une première direction transversale au substrat lors du trajet aller, puis suivant une deuxième direction transversale au substrat lors du trajet retour, ces deux directions transversales ayant la même inclinaison sur l'axe de défilement du substrat, mais étant symétriques par rapport à une direction perpendiculaire à cet axe de défilement.

Un autre mode de réalisation consiste à déplacer continûment le pulvérisateur, sur toute la largeur du substrat, suivant une première et une deuxième directions transversales perpendiculaires à la direction de défilement du substrat et à le déplacer simultanément dans le sens de défilement du substrat, le pulvérisateur étant ramené en amont d'une distance prédéterminée à chaque fois qu'il atteint l'une ou l'autre des deux extrémités de ses courses transversales.

Pour la mise en oeuvre du procédé selon l'invention, on utilise un dispositif qui, selon l'invention, comprend des moyens pour faire défiler un substrat, notamment en verre, un rail placé parallèlement et transversalement au substrat et un pulvérisateur qui est fixé sur un chariot, mobile sur le rail entre les deux bords du substrat, et qui est alimenté en composition liquide. Ce dispositif est caractérisé en ce qu'il comprend des moyens moteurs pour déplacer le chariot sur le rail avec une vitesse relative par rapport au substrat qui présente une composante axiale nulle.

Au dessin annexé, donné seulement à titre d'exemple :

- **les figures 1a et 1b** sont des vues en plan représentant un mode de réalisation de l'invention,

- **la figure 2** est une vue en plan montrant la configuration des traces formées par pulvérisation selon l'invention,

- **les figures 3 et 4** sont des vues en plan représentant deux autres modes de réalisation de l'invention,

- **la figure 5** représente une vue en perspective d'un dispositif classique de pulvérisation de produits liquides sur un support en déplacement,

- **la figure 6** est une vue en plan montrant la configuration des traces formées par une pulvérisation classique.

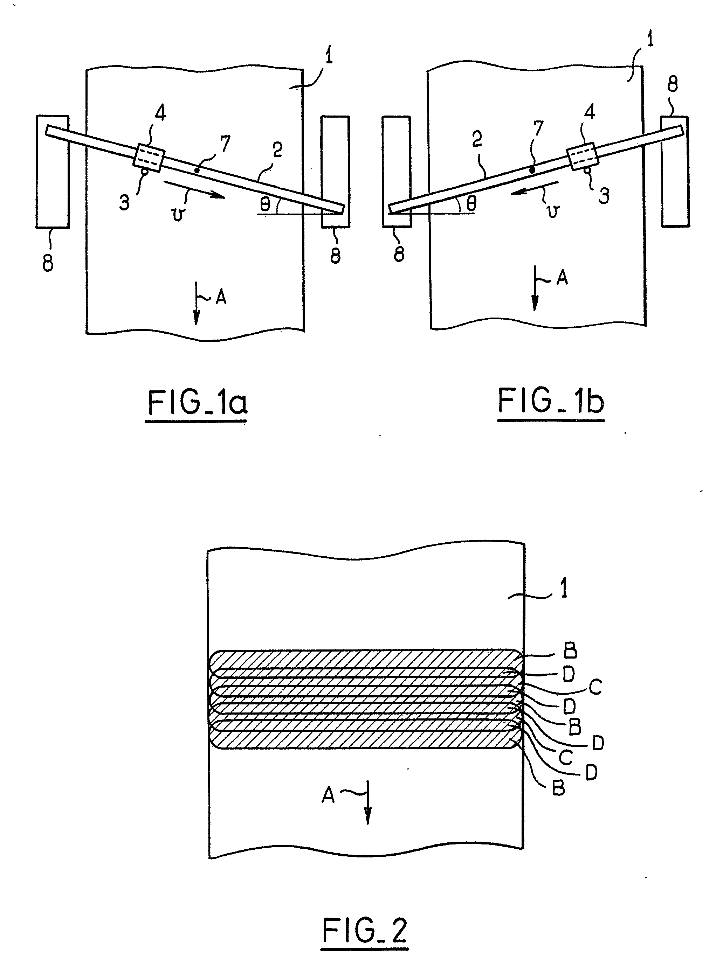

Aux figures 1a et 1b qui représentent un mode de réalisation du dispositif selon l'invention, le substrat 1 se déplace suivant la direction de la flèche A avec une vitesse V. Un rail 2 est adapté pour tourner parallèlement au substrat autour d'un pivot 7 perpendiculaire au substrat et situé à égale distance des bords du substrat. Ce rail porte un chariot 4 auquel est fixé un pulvérisateur 3. Le chariot 4 est entraîné par un moteur, non représenté, qui lui permet de se déplacer le long du rail 2 suivant un mouvement de va-et-vient avec une vitesse v. A une extrémité du rail 2, ou à ses deux extrémités, est monté un mécanisme 8 qui permet de faire basculer le rail 2 entre deux positions également inclinées sur l'axe de défilement du substrat, mais symétriques par rapport à une direction perpendiculaire à cet axe et passant par le pivot 7, lorsque le chariot 4 portant le pulvérisateur 3 atteint un des bords du substrat.

Lors de la mise en oeuvre du dispositif de pulvérisation, tel que représenté aux figures 1a et 1b, le substrat 1, chauffé à une température appropriée à 1a formation de la couche souhaitée, défile à la vitesse V suivant la direction de la flèche A. Le rail 2 occupe d'abord une première position inclinée, comme montré à la figure 1a, telle qu'il forme un angle 0 avec une direction perpendiculaire à celle du défilement du substrat. Le chariot 4, portant le pulvérisateur 3, se déplace le long du rail 2, à la vitesse v (course aller, de gauche à droite sur la figure 1a). Le pulvérisateur alimenté en composition liquide par un dispositif non représenté, projette lors de son déplacement, et sur toute la largeur du substrat, ladite composition qui forme une première trace. Lorsque le chariot 4 atteint le bord opposé du substrat, le mécanisme 8 fait basculer le rail 2 de telle sorte que ce dernier prend une position ayant la même inclinaison que lors de la course aller, mais symétrique par rapport à une direction perpendiculaire à la direction de défilement du substrat et passant par le pivot 7 (voir figure 1b). Le chariot 4 suit alors une course dite de retour (de droite à gauche sur la figure 1b), à la même vitesse v, permettant au pulvérisateur de projeter sur le substrat la composition liquide qui forme une deuxième trace. Lorsque le chariot 4 atteint de nouveau le bord opposé du substrat, le mécanisme 8 fait à nouveau basculer le rail 2, permettant au chariot 4 de continuer son mouvement de va-et-vient et, par suite, le dépôt d'autres traces de composition.

Selon l'invention, le chariot se déplace à une vitesse relative par rapport au substrat dont la composante axiale est nulle. Pour ce faire, on règle la vitesse linéaire v du chariot sur le rail de manière que celle-ci soit égale à $v = \frac{V}{\sin\theta}$, V étant la vitesse de défilement du substrat.

Toutes les traces déposées sur le substrat sont alors perpendiculaires à la direction de défilement du substrat.

La figure 2 représente le substrat 1 et les traces déposées successivement sur ce substrat par pulvérisation de la composition liquide, selon l'invention; les traces B correspondent par exemple aux courses aller du chariot 4 et les traces C correspondent aux courses retour du chariot. Ces traces, par suite du procédé de pulvérisation, peuvent avoir une certaine largeur et se superposer comme il est représenté en D. Du fait que, selon l'invention, les traces formées sur le substrat sont toutes perpendiculaires à la direction de défilement du substrat, les zones D de superposition, ainsi que les traces B et C, sont, contrairement à celles obtenues antérieurement (voir figure 6) régulières et homogènes suivant toute la largeur du substrat, ce qui entraîne notamment une couleur régulière et des propriétés constantes sur toute la largeur du substrat.

On doit noter que, par suite de la superposition des traces (zones D), la quantité de composition déposée varie périodiquement suivant la direction de défilement du substrat. Cependant, cette variation périodique est régulière et n'apparaît pas suivant la largeur du substrat ; par conséquent, la non-régularité de couleur, qui pourrait en résulter, n'est pratiquement pas décelable.

La figure 3 représente un autre mode de réalisation de l'invention selon lequel le rail 2 tourne parallèlement au substrat autour d'un pivot 7 perpendiculaire au substrat et situé à l'une des extrémités du rail.

Dans ce mode de réalisation, le mécanisme 8 fait aussi basculer le rail 2, en fonction du mouvement de va-et-vient du chariot 4, entre deux positions ayant la même inclinaison sur l'axe de défilement du substrat, mais symétriques par rapport à une direction perpendiculaire à la direction de défilement du substrat et passant par le pivot 7; le chariot 4 se déplace à la même vitesse linéaire v dans l'une ou l'autre des deux positions du rail.

La figure 4 représente un autre mode de réalisation du dispositif selon l'invention. Le rail 2 est monté transversalement au substrat et perpendiculairement à l'axe de défilement de ce dernier. Il se déplace suivant le sens de défilement du substrat. Sa vitesse de déplacement est celle du défilement du substrat.

A au moins l'une des extrémités du rail 2, est monté un moteur, représenté schématiquement en 9, ce moteur d'une part, entraîne le rail dans le sens de défilement du substrat et à la même vitesse, et, d'autre part, lorsque le chariot, sur lequel est fixé le pulvérisateur, arrive à l'une ou l'autre des deux extrémités de ses courses transversales, ce moteur ramène le rail en amont, d'une distance prédéterminée fonction de la largeur de la trace de composition déposée sur le substrat et de la vitesse du substrat.

Comme on l'a déjà indiqué, l'invention permet le dépôt d'une couche formée d'une succession de traces parallèles entre elles (voir figure 1a). L'irrégularité du dépôt obtenue antérieurement (voir figure 6) et, par suite les variations de propriétés et, dans certains cas, l'irrégularité de la couleur de la couche suivant la largeur du substrat, sont éliminées, permettant ainsi d'obtenir une couche de meilleure qualité.

L'invention permet aussi le dépôt de composition liquide même sur les bords du substrat, augmentant ainsi la surface utile du substrat traité.

Ainsi, on a pu noté que, avec le dispositif selon l'invention, le dépôt sur le substrat correspondait à la distance parcourue par le chariot sur lequel est fixé le pulvérisateur. Par exemple, pour une course de 3,05 m, la trace avait une longueur de 3,05 m alors qu'elle n'était que de 2,54 m avec un dispositif antérieur.

On a pu aussi augmenter la vitesse de défilement du substrat, par exemple jusqu'à 12,7 m/mn, et obtenir une couche de bonne qualité.

Le procédé et le dispositif selon l'invention peuvent être utilisés pour le dépôt de différentes couches sur un substrat en défilement, par pulvérisation de compositions liquides. Ainsi, ces couches peuvent être par exemple des couches électroconductrices ou réfléchissant le rayonnement infrarouge.

## Revendications

1. Procédé de formation d'une couche régulière sur un substrat en défilement, notamment en verre, consistant à pulvériser, sur ledit substrat chauffé, une composition liquide au moyen d'un pulvérisateur adapté pour se déplacer transversalement au substrat, **caractérisé en ce qu'**on pulvérise la composition liquide en déplaçant le pulvérisateur avec une vitesse relative par rapport à ce substrat qui présente une composante axiale nulle.

2. Procédé conforme à la revendication 1, **caractérisé que ce qu'**on déplace continûment le pulvérisateur, sur toute la largeur du substrat, suivant une première direction transversale au substrat, puis suivant une deuxième direction transversale au substrat, ces deux directions transversales de déplacement du pulvérisateur ayant la même inclinaison sur l'axe de défilement du substrat, mais étant symétriques par rapport à une direction perpendiculaire à cet axe de défilement.

3. Procédé conforme à la revendication 1, **caractérisé en ce qu'**on déplace continûment le pulvérisateur, sur toute la largeur du substrat, suivant une première et une deuxième directions transversales, perpendiculaires à la direction de défilement du substrat et **en ce qu'**on déplace simultanément le pulvérisateur dans le sens de défilement du substrat et à la même vitesse, le pulvérisateur étant ramené en amont d'une distance prédéterminée à chaque fois qu'il atteint l'une ou l'autre des deux extrémités de ses courses transversales.

4. Procédé conforme à la revendication 3, **caractérisé en ce que** la distance prédéterminée est fonction de la largeur de la trace de composition déposée sur le substrat et de la vitesse du substrat.

5. Dispositif pour la mise en oeuvre du procédé selon les revendications 1 à 4, comprenant des moyens pour faire défiler un substrat (1), notamment en verre, un rail (2) placé parallèlement et transversalement au substrat, un pulvérisateur (3) fixé sur un chariot (4) mobile sur le rail entre les deux bords du substrat et alimenté en composition liquide, **caractérisé en** ce qu'il comprend des moyens moteurs pour déplacer le chariot sur le rail avec une vitesse relative par rapport au substrat qui présente une composante axiale nulle.

6. Dispositif conforme à la revendication 5, **caractérisé en ce que** le rail (2) est monté sur un pivot (7) perpendiculaire au substrat autour duquel il tourne parallèlement au substrat.

7. Dispositif conforme à la revendication 6, **caractcrisé en ce que** le pivot (7) est situé à égale distance des bords du substrat et **en** ce **qu'**à au moins une des extrémités du rail (2), est monté un mécanisme (8) pour faire basculer le rail (2) entre deux positions également inclinées sur l'axe de défilement du substrat, mais symétriques par rapport à une direction perpendiculaire à cet axe de défilement et passant par le pivot (7).

8. Dispositif conforme à la revendication 6, **caractérisé en ce que** le pivot (7) est situé à l'une des deux extrémités du rail (2) et **en ce qu'**à l'autre extrémité, est monté un mécanisme (8) pour faire basculer le rail (2) entre deux positions également inclinées sur l'axe de défilement du substrat, mais symétriques par rapport à une direction perpendiculaire à cet axe de défilement et passant par le pivot (7).

9. Dispositif conforme à la revendication 5, **caractérisé en ce qu'**il comprend, à au moins une extrémité du rail (2), un mécanisme (9) pour faire déplacer le rail (2) dans le sens de défilement du substrat et à la même vitesse et pour le ramener en amont d'une distance prédéterminée à chaque fois que le chariot (4) atteint l'un ou l'autre des deux bords du substrat.

## FIG.1a

## FIG.1b

## FIG.2

FIG_3

FIG_4

FIG_5

FIG_6